# EUROPÄISCHE PATENTANMELDUNG

(11) **EP 4 434 658 A2**
(43) Veröffentlichungstag der Anmeldung: **25.09.2024**
(21) Anmeldenummer: 24156293.3
(22) Anmeldetag: 07.02.2024
(51) Int. Cl.: B23B 31/00, B23B 31/107, B23B 51/00, B23B 51/12

(54) **BOHRVORRICHTUNG, INSBESONDERE SAUGBOHRVORRICHTUNG, ZUM BOHREN EINES BOHRLOCHES**

(30) Priorität: 22.03.2023 DE 102023010723; 19.04.2023 DE 102023109922
(71) Anmelder: Heller Tools GmbH, 49413 Dinklage (DE)
(72) Erfinder: Lampe, Rainer, 49413 Dinklage (DE)
(74) Vertreter: Gottschald Patentanwälte Partnerschaft mbB

(57) **Zusammenfassung**

Bohrvorrichtung, insbesondere Saugbohrvorrichtung, zum Bohren eines Bohrloches, wobei die Bohrvorrichtung (1) eine Bohreraufnahme (2) und einen Bohrer (4) aufweist, wobei die Bohreraufnahme (2) einen Anschlussbereich (3) zum Anschluss der Bohrvorrichtung (1) an eine Bohrmaschine und einen Aufnahmebereich (8) zur Aufnahme des Bohrers (4) aufweist, wobei der Bohrer (4) einen Schaft (9) aufweist, der im montierten Zustand von dem Aufnahmebereich (8) aufgenommen, insbesondere in den Aufnahmebereich (8) eingesteckt, und über eine axiale Bohrersicherung (10) lösbar in axialer Richtung fixiert ist, wobei der Schaft (9) einen Sicherungsbereich (11) aufweist, wobei der Sicherungsbereich (11) im montierten Zustand den Bohrer (4) gegenüber der Bohreraufnahme (2) gegen Verdrehen sichert, wobei der Sicherungsbereich (11) entlang dessen Länge eine Sicherungskontur (12) aufweist, wobei die Sicherungskontur (12) mehrere gekrümmte Schaft-Bogenabschnitte (13) und mehrere Schaft-Verbindungsabschnitte (14), welche die Schaft-Bogenabschnitte (13) an mehreren Schaft-Verbindungspunkten (15) untereinander verbinden, aufweist. Die Schaft-Bogenabschnitte (13) und die Schaft-Verbindungsabschnitte (14) gehen in den Schaft-Verbindungspunkten (15) tangential ineinander über.

## Beschreibung

Die vorliegende Erfindung betrifft eine Bohrvorrichtung zum Bohren eines Bohrloches gemäß dem Oberbegriff von Anspruch 1 sowie einen Bohrer gemäß dem Oberbegriff von Anspruch 12 sowie eine Bohreraufnahme gemäß dem Oberbegriff von Anspruch 13 sowie eine Hülse gemäß Anspruch 14 sowie entsprechende Fertigungsverfahren gemäß Anspruch 15.

Bohrvorrichtungen zum Bohren von Bohrlöchern sind im Stand der Technik in zahlreichen Ausführungen bekannt. So kommen Bohrvorrichtungen etwa zum Bohren von Holz, Kunststoffen, Keramiken, Beton, Stahlbeton und Stein sowohl im gewerblichen als auch im privaten Bereich zum Einsatz. Während ein Großteil der Bohrvorrichtungen einen Bohrer umfassen, welcher direkt in das Bohrfutter einer Bohrmaschine einspannbar ist, weist die in Rede stehende Bohrvorrichtung zunächst eine Bohreraufnahme auf, in welcher zum einen ein Bohrer der Bohrvorrichtung aufnehmbar ist und welche zum anderen den Anschluss der Bohrvorrichtung an eine Bohrmaschine, wie etwa eine Hammer-, Schlag- und/oder Drehbohrmaschine, ermöglicht.

Der bekannte Stand der Technik (DE 30 04 077 A1) von dem die Erfindung ausgeht, betrifft eine Bohrvorrichtung gemäß dem Oberbegriff von Anspruch 1. Die Bohrvorrichtung ist hier als Saugbohrvorrichtung ausgebildet, bei welcher während des Bohrvorgangs das zu bohrende Baumaterial als Bohrmehl abgesaugt wird. Die bekannte Bohrvorrichtung weist eine Bohreraufnahme und einen Bohrer auf, wobei der Bohrer in einem Aufnahmebereich der Bohreraufnahme aufnehmbar ist. Über einen Anschlussbereich der Bohreraufnahme lässt sich die Bohrvorrichtung an eine Bohrmaschine lösbar anschließen, so dass mit der Bohrvorrichtung entsprechend gebohrt werden kann. Um den Bohrer in der Bohreraufnahme anordnen zu können, weist der Bohrer einen Schaft auf, welcher in den Aufnahmebereich der Bohreraufnahme einsteckbar ist. Bei der bekannten Bohrvorrichtung wird der Bohrer in der Bohreraufnahme in axialer Richtung durch eine axiale Bohrersicherung, hier nämlich durch einen Federring, lösbar fixiert. Da die axiale Bohrersicherung konstruktionsbedingt keine oder nur eine sehr geringe Sicherung des Bohrers gegen Verdrehen während des Bohrvorgangs darstellt, weist der Schaft der bekannten Bohrvorrichtung zusätzlich einen mittleren Sicherungsbereich zur Sicherung gegen Verdrehen auf. Der Sicherungsbereich weist entlang dessen Länge eine äußere Sicherungskontur auf, die zwei gekrümmte Schaft-Bogenabschnitte aufweist, welche über zwei gerade Schaft-Verbindungsabschnitte an mehreren Schaft-Verbindungspunkten untereinander verbunden sind.

Durch einen entsprechend ausgebildeten Aufnahmebereich, wird der Bohrer grundsätzlich am Verdrehen gegenüber der Bohreraufnahme gehindert, indem etwa ein Formschluss des Teils des Sicherungsbereichs, der die äußere Sicherungskontur aufweist, und des Aufnahmebereichs erfolgt. Über diese verdrehsichere Verbindung von Bohrer und Bohreraufnahme wird entsprechend auch das Moment von der Bohreraufnahme auf den Bohrer übertragen.

Obschon sich damit die bekannte Bohrvorrichtung durchaus eignet, Löcher in unterschiedlichen Baumaterialien zu bohren, so hat es sich als nachteilig herausgestellt, dass sich der Sicherungsbereich des Bohrers sowie der Aufnahmebereich der Bohreraufnahme doch vergleichsweise schnell abnutzen. So kann es beispielsweise vorkommen, dass der Bohrer während eines Bohrvorgangs in dem Baumaterial verhakt, wodurch verhältnismäßig große Momente von der Bohreraufnahme auf den Bohrer übertragen werden und Beschädigungen des Bohrers im Sicherungsbereich und der Bohreraufnahme im Aufnahmebereich auftreten können.

Zwar sind im Stand der Technik auch weitere Bohrvorrichtungen bekannt (beispielsweise aus der DE 10 2019 123 995 A1), jedoch sind diese aus fertigungs- und auch montagetechnischer Sicht häufig aufwändiger, da etwa noch zusätzliche Elemente für die Sicherung gegen Verdrehen, o.ä. vorgesehen sind.

Der Erfindung liegt daher das Problem zugrunde, die bekannte Bohrvorrichtung derart auszugestalten und weiterzubilden, dass diese hinsichtlich der genannten Herausforderung optimiert wird, so dass insbesondere eine langlebige Bohrvorrichtung geschaffen wird, die vergleichsweise einfach zu fertigen ist.

Das obige Problem wird durch die Merkmale des kennzeichnenden Teils von Anspruch 1 gelöst.

Wesentlich ist die grundsätzliche Überlegung, dass die Sicherungskontur eckenlos und damit insbesondere der Sicherungsbereich, der die Sicherungskontur aufweist, kantenlos ausgebildet ist. Im Stand der Technik schneiden sich dahingegen die Schaft-Bogenabschnitte und die Schaft-Verbindungsabschnitte an den Schaft-Verbindungspunkten in einem Winkel zueinander, wodurch sich in jedem der Schaft-Verbindungspunkte eine Ecke der Sicherungskontur und damit über die Länge eine Kante des Sicherungsbereichs, der die Sicherungskontur aufweist, ausbildet. Die kantenlose Ausgestaltung des Teils des Sicherungsbereichs, der die Sicherungskontur aufweist, führt zu einer verbesserten Kraft- und Momentenübertragung von der Bohreraufnahme auf den Bohrer, wodurch sich insbesondere auch etwaige größere Momente ohne Weiteres übertragen lassen, ohne dass es zu Beschädigungen oder übermäßiger Abnutzung des Bohrers und/oder der Bohreraufnahme kommt. Gleichermaßen lässt sich die eckenlose Sicherungskontur und der kantenlose Teil des Sicherungsbereichs, der die Sicherungskontur aufweist, weiterhin vergleichsweise einfach fertigen, beispielsweise durch entsprechendes Abfräsen mit einem Fräser. Weitere Bauteile, wie etwa Sicherungsstifte, die zusätzlich gefertigt und entsprechend montiert werden müssen, sind bei der Erfindung nicht erforderlich. Es ergibt sich damit eine insgesamt langlebige Bohrvorrichtung, die vergleichsweise einfach zu fertigen ist.

Im Einzelnen wird vorgeschlagen, dass die Schaft-Bogenabschnitte und die Schaft-Verbindungsabschnitte in den Schaft-Verbindungspunkten tangential ineinander übergehen.

Anspruch 2 betrifft vorteilhafte Ausgestaltungen die Sicherungskontur betreffend. Durch einen Sicherungsbereich mit rotationssymmetrischer Sicherungskontur wird die Montage, insbesondere das Einstecken, des Bohrers in der Bohreraufnahme vereinfacht. Diese kann in unterschiedlichen Winkelpositionen erfolgen. Eine im Wesentlichen gleiche Ausbildung der Schaft-Bogenabschnitte und/oder der Schaft-Verbindungsabschnitte kann die Auslegung und Fertigung der Sicherungskontur vereinfachen.

In Anspruch 3 werden die Schaft-Bogenabschnitte und die Schaft-Verbindungsabschnitte vorteilhaft weitergebildet. Insbesondere ungekrümmte, also gerade ausgebildete, Schaft-Verbindungsabschnitte und gekrümmte, etwa als Teil einer Ellipse oder eines Kreises ausgebildete, Schaft-Bogenabschnitte können dabei eine Sicherungskontur schaffen, der eine gute Drehmomentübertragung während des Bohrens ermöglicht und gleichzeitig vergleichsweise einfach zu fertigen ist.

Nach einer vorteilhaften Ausgestaltung gemäß Anspruch 4 ist vorgesehen, dass sich der Sicherungsbereich nicht über die gesamte Länge, sondern nur über einen Teil der Länge des Schaftes erstreckt. Hierdurch kann der Schaft einen oder mehrere weitere Schaftbereiche mit jeweils einer Schaftkontur aufweisen, was durch entsprechende Ausgestaltung die Handhabbarkeit der Bohrvorrichtung verbessern kann, indem beispielsweise gewisse Funktionen, wie etwa das Verhindern des Herausrutschens des Bohrers aus der Bohreraufnahme, durch die entsprechende Schaftbereiche umgesetzt werden können. Die Schaftbereiche können in axialer Richtung des Bohrers hintereinander angeordnet sein. Eine endseitige Anordnung des Sicherungsbereichs, insbesondere des Teiles des Sicherungsbereichs, der die Sicherungskontur aufweist, kann die Fertigung des Bohrers vereinfachen.

Anspruch 5 betrifft vorteilhafte Ausgestaltungen der axialen Bohrersicherung. Die axiale Bohrersicherung kann den Benutzungskomfort erhöhen und die Handhabung der Bohrvorrichtung verbessern. Eine formschlüssige axiale Sicherung ermöglicht eine sichere Fixierung des Bohrers in der Bohreraufnahme, insbesondere gegenüber Sicherungsmitteln, welche durch Reibung sichern und die durch Fette, Öle, etc. im Handwerksbereich unter Umständen versagen können. Ein als Sprengring ausgebildetes Formschlusselement bietet eine kostengünstige und funktionale Lösung hierfür. Eine Anordnung der Nut oder der Eingriffnut an der der Bohrerspitze zugewandten Seite des Schaftes ermöglicht eine einfache Montierung des Formschlusselementes an dem Schaft oder in dem Aufnahmebereich.

Eine vorteilhafte Ausgestaltung gemäß Anspruch 6 sieht einen Bohreranschlag sowie einen Aufnahmeanschlag vor, welche die Montage des Bohrers in der Bohreraufnahme vereinfachen und so die Handhabbarkeit der Bohrvorrichtung verbessern können. Etwa kann der Bohrer in die Bohreraufnahme bis die Anschläge kontaktieren eingesteckt werden, ohne dass eine weitere Ausrichtung in axialer Richtung erforderlich ist. Eine endseitige Anordnung des Bohreranschlages an der der Bohreraufnahme zugewandten Stirnseite des Bohrers, insbesondere des Schaftes, bietet eine konstruktiv einfach umzusetzende Ausgestaltungsmöglichkeit. Zudem ist es in diesem Zusammenhang für den Fall, dass der Bohrer als Saugbohrer ausgestaltet ist, möglich, dass die Anlage der Anschläge eine Ablagerung von abgesaugtem Bohrmehl in dem Aufnahmebereich zumindest minimieren kann. Ferner kann insbesondere bei Anschluss an eine Hammer- oder Schlagbohrmaschine über die Anschläge die Schlagkraft direkt zentrisch in den Bohrer eingeleitet werden.

Anspruch 7 betrifft vorteilhafte Ausgestaltungen den Aufnahmebereich betreffend, welche eine verbesserte Kraft- und Momentenübertragung der Bohreraufnahme auf den Bohrer während eines Bohrvorgangs ermöglichen, welche insbesondere vergleichsweise einfach zu fertigen ist. Ein zu dem Sicherungsbereich im mathematischen Sinne ähnlich ausgestalteter Aufnahmebereich ermöglicht zudem etwa die passgenaue Aufnahme des Bohrers in der Bohreraufnahme. Eine Kontaktierung an zumindest drei Anlagegeraden ermöglicht zudem etwa eine gleichmäßigere Kraft- und Momentenübertragung.

Die Ansprüche 8 und 9 betreffen vorteilhafte Ausgestaltungen der Bohrvorrichtung mit einer Hülse. Eine aufsteckbare Hülse, die eine entsprechende Aufsteckausnehmung aufweist, kann die Handhabbarkeit der Bohrvorrichtung verbessern, indem etwa die Hülse ohne Weiteres bedarfsweise aufsteckbar oder absteckbar ist (Anspruch 8). Eine formschlüssige axiale Sicherung ermöglicht eine sichere Fixierung der Hülse (Anspruch 8). Die als Abstandhülse oder als Bohrhülse ausgebildete Hülse kann die Funktionalität der Bohrvorrichtung erweitern (Anspruch 8). Im Falle der als Bohrhülse ausgebildeten Hülse kann eine Hülsen-Sicherungskontur eine verbesserte Kraft- und Momentenübertragung ermöglichen (Anspruch 8). Mit den vorteilhaften Ausgestaltungen der Hülsen-Sicherungskontur gemäß Anspruch 9 gehen etwa die im Zusammenhang mit den Ansprüchen 2 beziehungsweise 3 genannten Vorteile einher.

In Anspruch 10 wird der Aufsteckbereich der Bohreraufnahme vorteilhaft weitergebildet, wobei die Ausgestaltungen eine verbesserte Kraft- und Momentenübertragung der Bohreraufnahme auf die Hülse während eines Bohrvorgangs ermöglichen.

Die vorteilhaften Ausgestaltungen gemäß Anspruch 11 können die Montage der Hülse an der Bohreraufnahme vereinfachen und entsprechend die Handhabbarkeit der Bohrvorrichtung verbessern.

Nach einer weiteren Lehre gemäß Anspruch 12, der eigenständige Bedeutung zukommt, wird ein Bohrer, insbesondere Gestein-Bohrer, beansprucht. Der Bohrer weist einen Schaft zur Anordnung an einem Aufnahmebereich einer Bohreraufnahme einer Bohrvorrichtung auf, wobei der Schaft einen Sicherungsbereich zur Sicherung des montierten Bohrers gegenüber der Bohreraufnahme gegen Verdrehen aufweist, wobei der Sicherungsbereich entlang dessen Länge eine Sicherungskontur aufweist, wobei die Sicherungskontur mehrere gekrümmte Schaft-Bogenabschnitte und mehrere Schaft-Verbindungsabschnitte, welche die Schaft-Bogenabschnitte an mehreren Schaft-Verbindungspunkten untereinander verbinden, aufweist.

Dabei ist wesentlich, dass die Schaft-Bogenabschnitte und die Schaft-Verbindungsabschnitte in den Schaft-Verbindungspunkten tangential ineinander übergehen.

Der Bohrer kann insbesondere für eine vorschlagsgemäße Bohrvorrichtung verwendet werden. Auf alle Ausführungen zu der vorschlagsgemäßen Bohrvorrichtung, insbesondere zu dem Bohrer der vorschlagsgemäßen Bohrvorrichtung, darf daher verwiesen werden.

Nach einer weiteren Lehre gemäß Anspruch 13, der ebenfalls eigenständige Bedeutung zukommt, wird eine Bohreraufnahme, insbesondere einer vorschlagsgemäßen Bohrvorrichtung, beansprucht. Die Bohreraufnahme weist einen Anschlussbereich zum, insbesondere lösbaren, Anschluss an eine Bohrmaschine und einen Aufnahmebereich zur, insbesondere steckbaren, Aufnahme eines Bohrers auf.

Dabei ist wesentlich, dass die Bohreraufnahme derart ausgebildet ist, dass in oder an dem Aufnahmebereich ein vorschlagsgemäßer Bohrer aufnehmbar ist.

Auf alle Ausführungen zu der vorschlagsgemäßen Bohrvorrichtung und dem vorschlagsgemäßen Bohrer darf verwiesen werden.

Nach einer weiteren Lehre gemäß Anspruch 14, der ebenfalls eigenständige Bedeutung zukommt, wird eine Hülse, insbesondere Abstands- oder Bohrhülse, beansprucht. Die Hülse weist eine Aufsteckausnehmung zum Aufstecken an einem Aufsteckbereich einer Bohreraufnahme einer Bohrvorrichtung auf, wobei die Aufsteckausnehmung über zumindest einen Teil ihrer Länge eine Hülsen-Sicherungskontur zur Sicherung der montierten Hülse gegenüber der Bohreraufnahme gegen Verdrehen aufweist, wobei die Hülsen-Sicherungskontur mehrere gekrümmte Hülsen-Bogenabschnitte und mehrere Hülsen-Verbindungsabschnitte, welche die Hülsen-Bogenabschnitte an mehreren Hülsen-Verbindungspunkten untereinander verbinden, aufweist.

Hierbei ist wesentlich, dass die Hülsen-Bogenabschnitte und die Hülsen-Verbindungsabschnitte in den Hülsen-Verbindungspunkten tangential ineinander übergehen.

Die Hülse kann insbesondere für eine vorschlagsgemäße Bohrvorrichtung verwendet werden. Auf alle Ausführungen zu der vorschlagsgemäßen Bohrvorrichtung, dem Bohrer und der Bohreraufnahme darf verwiesen werden.

Nach einer weiteren Lehre gemäß Anspruch 15, der ebenfalls eigenständige Bedeutung zukommt, werden Fertigungsverfahren, insbesondere für eine vorschlagsgemäße Bohrvorrichtung, beansprucht. Beansprucht wird zunächst ein Verfahren zur Fertigung eines vorschlagsgemäßen Bohrers beansprucht, bei welchem der Sicherungsbereich des Schaftes, der die Sicherungskontur aufweist, mit einem Drehmeißel oder insbesondere mit einem Fräser, vorzugsweise einem Schaftfräser, gefertigt wird und der Drehmeißel oder der Fräser Material in Richtung quer zur Hauptachse des Schaftes abträgt. Ein derartiges Verfahren kann insbesondere eine Möglichkeit eröffnen, den Sicherungsbereich des Schaftes in einem Arbeitsschritt, insbesondere ohne weitere Nachbearbeitung, zu fertigen.

Auf alle Ausführungen zu der vorschlagsgemäßen Bohrvorrichtung, der Bohreraufnahme, der Hülse und insbesondere zu dem vorschlagsgemäßen Bohrer darf verwiesen werden.

Beansprucht wird weiter ein Verfahren zur Fertigung einer vorschlagsgemäßen Bohreraufnahme beansprucht, bei welchem der Teil des Aufnahmebereichs der Bohreraufnahme, der die Aufnahmekontur aufweist, mit einem Fräser, insbesondere einem Schaftfräser, gefertigt wird und der Fräser Material in Richtung quer zur Hauptachse des Aufnahmebereichs abträgt.

Auf alle Ausführungen zu der vorschlagsgemäßen Bohrvorrichtung, dem Bohrer, der Hülse und insbesondere der vorschlagsgemäßen Bohreraufnahme sowie dem vorschlagsgemäßen Verfahren zur Fertigung eines Bohrers darf verwiesen werden.

Beansprucht wird weiter ein Verfahren zur Fertigung einer vorschlagsgemäßen Hülse beansprucht. Bei dem Verfahren wird der Teil der Aufsteckausnehmung der Hülse, der die Hülsen-Sicherungskontur aufweist, mit einem Fräser, insbesondere einem Schaftfräser, gefertigt, wobei der Fräser Material in Richtung quer zur Hauptachse der Aufsteckausnehmung abträgt.

Auf alle Ausführungen zu der vorschlagsgemäßen Bohrvorrichtung, dem Bohrer, der Bohreraufnahme, insbesondere der Hülse, dem Verfahren zur Fertigung eines Bohrers und dem Verfahren zur Fertigung einer Bohreraufnahme darf verwiesen werden.

Im Folgenden wird die Erfindung anhand einer lediglich Ausführungsbeispiele darstellenden Zeichnung näher erläutert. In der Zeichnung zeigt
- Fig. 1: eine schematische Darstellung einer vorschlagsgemäßen Bohrvorrichtung in perspektivischer Ansicht mit Detailansicht und Schnittansichten,
- Fig. 2: eine schematische Darstellung einer vorschlagsgemäßen Bohreraufnahme sowie einem vorschlagsgemäßen Bohrer in zwei Ausführungen in perspektiven Ansichten mit einer Detailansicht und
- Fig. 3: jeweils eine schematische Darstellung einer vorschlagsgemäßen Bohreraufnahme, in a) mit einer Bohrhülse und in b) mit einer Abstandshülse.

Das in den Figuren dargestellte und insoweit bevorzugte Ausführungsbeispiel betrifft eine Bohrvorrichtung 1 zum Bohren eines Bohrlochs. Die Bohrvorrichtung 1 ist, hier und vorzugsweise, als Saugbohrvorrichtung ausgebildet, durch welche während eines Bohrvorgangs das zu bohrende Baumaterial, insbesondere Stein, Beton, Stahlbeton, o.ä., als Bohrmehl absaugbar ist.

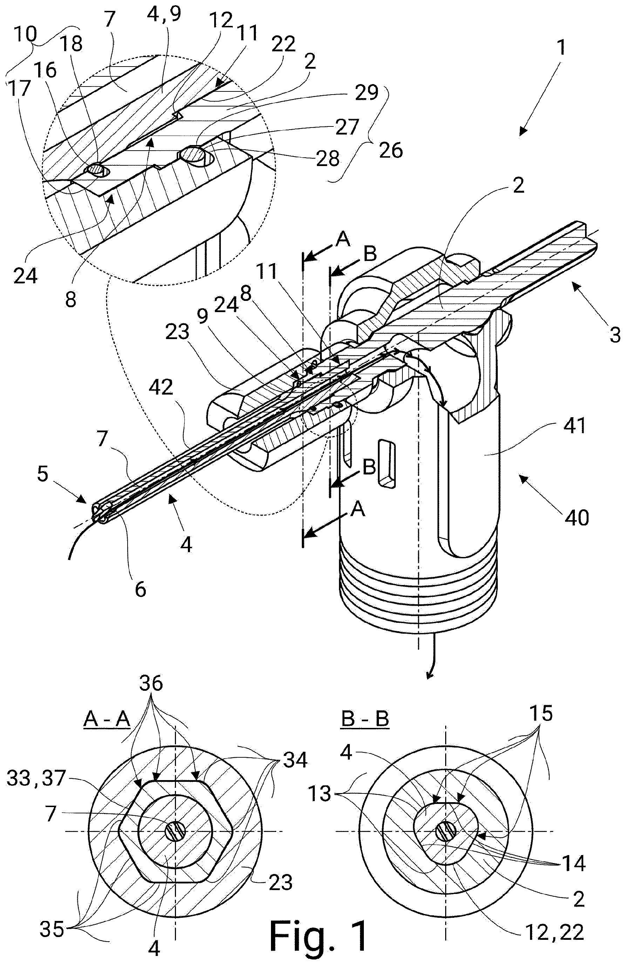

Die Bohrvorrichtung 1 weist zunächst eine, insbesondere einstückig ausgebildete, Bohreraufnahme 2 auf. Die Bohreraufnahme 2 weist einen Anschlussbereich 3 zum lösbaren Anschluss der Bohrvorrichtung 1 an eine Bohrmaschine auf. Unter einer "Bohrmaschine" sind alle Arten von Bohrmaschinen zu verstehen, insbesondere Hammer-, Schlag- und/oder Drehbohrmaschinen. In Fig. 1 dargestellt und vorzugsweise ist der Anschlussbereich 3 ein endseitiger Anschlussbereich 3, welcher etwa in ein Bohrfutter der Bohrmaschine auf bekannte Art und Weise einspannbar ist. Der Anschlussbereich 3 kann etwa als sechs- oder achtkantiger Anschlussbereich 3 ausgebildet sein. Der Anschlussbereich 3 kann ebenfalls beispielsweise als SDS-, insbesondere als SDS-Plus- oder SDS-Max-, kompatibler Anschlussbereich 3 ausgebildet sein.

Neben der Bohreraufnahme 2 weist die Bohrvorrichtung 1 einen Bohrer 4 auf. Hier und vorzugsweise handelt es sich bei dem Bohrer 4 um einen Gestein-Bohrer, welcher insbesondere eine Bohrerspitze 5 mit stirnseitigem Schneideinsatz 6 aufweist. Der Bohrer 4 weist, hier und vorzugsweise, einen Saugkanal 7 auf, über welchen das zu bohrende Baumaterial als Bohrmehl während des Bohrvorgangs hin zu der Bohreraufnahme 2 abgesaugt wird.

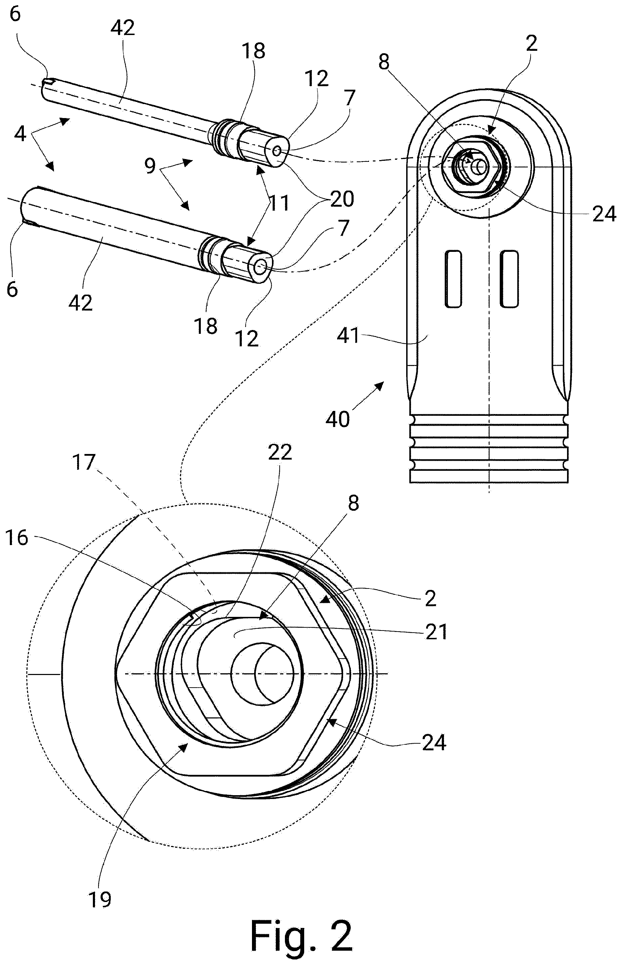

Zur Aufnahme des Bohrers 4 weist die Bohreraufnahme 2 einen Aufnahmebereich 8 auf. Der Aufnahmebereich 8 ist vorzugsweise, wie in den Fig. 1 und 2 dargestellt, ein endseitiger und dem Anschlussbereich 3 gegenüberliegender Aufnahmebereich 8. Hier und vorzugsweise ist der Aufnahmebereich 8 im Inneren der Bohreraufnahme 2 ausgebildet, so dass der Bohrer 4 in den Aufnahmebereich 8 entsprechend einsteckbar ist. Grundsätzlich ist es aber auch denkbar, dass der Aufnahmebereich 8 am Äußeren der Bohreraufnahme 2 ausgebildet ist und der Bohrer 4 auf den Aufnahmebereich 8 entsprechend ansteckbar ist.

Der Bohrer 4 der vorschlagsgemäßen Bohrvorrichtung 1 weist einen Schaft 9 auf, welcher im montierten Zustand von dem Aufnahmebereich 8 aufgenommen, insbesondere eingesteckt, ist (Fig. 1). Neben dem Schaft 9 kann der Bohrer 4 einen Bohrschaft 42 aufweisen. Der Schaft 9 kann sich von einem Ende des Bohrers 4 in Richtung der Bohrerspitze 5 bis zum Bohrschaft 42 erstrecken. Hier und vorzugsweise ist der Schaft 9 des Bohrers 4 jener Bereich des Bohrers 4, der im montierten Zustand zumindest teilweise, insbesondere vollständig, von dem Aufnahmebereich 8 aufgenommen ist. Über eine axiale Bohrersicherung 10 der Bohrvorrichtung 1 ist der Bohrer 4, insbesondere der Schaft 9, in der Bohreraufnahme 2, insbesondere dem Aufnahmebereich 8, in axialer Richtung lösbar fixiert. Die axiale Bohrersicherung 10 ist dabei vorzugsweise zumindest derart ausgestaltet, dass der Bohrer 4 nur durch manuell aufgebrachte Kraft durch einen Benutzer aus der Bohreraufnahme 2 entfernbar ist. Hier und vorzugsweise ist der Bohrer 4 in der Bohreraufnahme 2 durch die axiale Bohrersicherung 10 im Zuge der Einsteckbewegung des Bohrers 4 in die Bohreraufnahme 2 automatisch fixierbar.

Die axiale Richtung meint die Verlaufsrichtung der Rotationsachse des Bohrers 4.

Der Schaft 9 weist einen Sicherungsbereich 11 auf, der im montierten Zustand den Bohrer 4 gegenüber der Bohreraufnahme 2 gegen Verdrehen sichert. Der Sicherungsbereich 11 ist, hier und vorzugsweise, als endseitiger Sicherungsbereich 11 ausgebildet, der insbesondere an der der Bohrerspitze 5 abgewandten Seite des Schaftes 9 angeordnet ist.

Der Sicherungsbereich 11 weist entlang dessen, insbesondere gesamten, Länge eine, insbesondere umfänglich umlaufende, Sicherungskontur 12 auf. Die Länge des Sicherungsbereichs 11 erstreckt sich in axialer Richtung des Bohrers 4. Die Sicherungskontur 12 kann etwa den Fig. 1 (Schnitt B-B) und Fig. 2 entnommen werden. Die Sicherungskontur 12 ist insbesondere die Umfangskontur des Schaftes 9, vorzugsweise des Sicherungsbereichs 11. Die Sicherungskontur 12 kann über die Länge des Sicherungsbereichs 11, hier und vorzugsweise, gleichbleibend ausgebildet sein. Alternativ ist es jedoch denkbar, dass die Sicherungskontur 12 zumindest bereichsweise über die Länge des Sicherungsbereichs 11 variiert, etwa durch bereichsweise Ausnehmungen, konische Gestaltung, etc.

Umfänglich oder Umfang bezieht sich auf eine Richtung um die Rotationsachse des Bohrers 4, vorzugsweise in einer Ebene orthogonal zur Rotationsachse des Bohrers 4.

Die vorzugsweise Ausgestaltung der Sicherungskontur 12 ergibt sich insbesondere aus der Schnittdarstellung der Fig. 1. Es ist vorgesehen, dass die Sicherungskontur 12 mehrere gekrümmte Schaft-Bogenabschnitte 13 und mehrere Schaft-Verbindungsabschnitte 14, welche die Schaft-Bogenabschnitte 13 an mehreren Schaft-Verbindungspunkten 15 untereinander verbinden, aufweist. Insbesondere ist vorgesehen, dass jeder der Schaft-Bogenabschnitte 13 durch jeweils zwei Schaft-Verbindungsabschnitte 14 mit zumindest einem, hier und vorzugsweise mit zwei, Schaft-Bogenabschnitt 13 verbunden ist. Die Sicherungskontur 12 ist, hier und vorzugsweise, als umlaufende und/oder äußere Sicherungskontur 12 ausgebildet.

Die Schaft-Bogenabschnitte 13 weisen eine Krümmung auf. Die Krümmung kann dabei über die Länge des jeweiligen Schaft-Bogenabschnittes 13 vorzugsweise konstant sein. Die Krümmung der einzelnen Schaft-Bogenabschnitte 13 kann insbesondere gleich groß zu der Krümmung der anderen Schaft-Bogenabschnitte 13 sein. Vorzugsweise sind die Krümmungen der Schaft-Bogenabschnitte 13 in die gleiche Richtung bezogen auf den jeweiligen Schaft-Bogenabschnitt 13 ausgebildet.

Die Schaft-Verbindungsabschnitte 14 sind, hier und vorzugsweise, ungekrümmt ausgebildet, weisen insoweit keine Krümmung auf. Es ist jedoch ebenso denkbar, dass die Schaft-Verbindungsabschnitte 14 eine Krümmung aufweisen, welche insbesondere von der Krümmung der Schaft-Bogenabschnitte 13 abweicht. Es ist insbesondere möglich, dass die Krümmung der Schaft-Verbindungsabschnitte 14 der Krümmung der Schaft-Bogenabschnitte 13 entgegengesetzt ist. Vorzugsweise sind die Krümmungen der Schaft-Verbindungsabschnitte 14 in die gleiche Richtung bezogen auf den jeweiligen Schaft-Verbindungsabschnitt 14 ausgebildet.

Die Schaft-Bogenabschnitte 13 gehen jeweils in zwei Schaft-Verbindungspunkten 15 in zwei unterschiedlichen Schaft-Verbindungsabschnitten 14 über. Im Zusammenhang mit den Schaft-Verbindungspunkten 15 ist es vorzugsweise möglich, dass die, insbesondere alle, Schaft-Verbindungspunkte 15 der Sicherungskontur 12 zueinander zumindest 0,7 mm, vorzugsweise mindestens 1,4 mm, weiter vorzugsweise mindestens 2,1 mm, beabstandet sind. Insbesondere können jeweils zwei Schaft-Verbindungspunkte 15, die an einen der Schaft-Bogenabschnitte 13 angrenzen, zueinander zumindest 0,7 mm, vorzugsweise mindestens 1,4 mm, weiter vorzugsweise mindestens 2,1 mm, beabstandet sein. Für den vorzugsweisen Fall, dass die Schaft-Bogenabschnitte 13 als Teil eines Kreises ausgebildet sind, entspräche dies einem Krümmungsradius der Schaft-Bogenabschnitte 13 von ungefähr zumindest 0,5 mm, vorzugsweise ungefähr mindestens 1 mm, weiter vorzugsweise ungefähr mindestens 1,5 mm.

Wesentlich ist nun, dass die, insbesondere alle, Schaft-Bogenabschnitte 13 und die, insbesondere alle, Schaft-Verbindungsabschnitte 14 in den, insbesondere allen, Schaft-Verbindungspunkten 15 tangential ineinander übergehen. In den Schaft-Verbindungspunkten 15 ist insoweit ein tangentialer Übergang ausgebildet. Hierdurch ergibt sich eine Sicherungskontur 12 die eckenlos ausgebildet ist. Der Sicherungsbereich 11 ist entsprechend entlang dessen Länge kantenlos ausgebildet.

Es ist vorzugsweise vorgesehen, dass die Sicherungskontur 12 rotationssymmetrisch ausgestaltet ist. Hieraus kann sich zumindest in dem Teil des Sicherungsbereichs 11, welcher die Sicherungskontur 12 aufweist, ein rotationssymmetrischer Sicherungsbereich 11 ergeben. Die Rotationssymmetrie ergibt sich bezogen auf die Hauptachse des Bohrers 4. Aus den Fig. 1 und 2 ersichtlich und vorzugsweise ist die Sicherungskontur 12 dreifach rotationssymmetrisch ausgestaltet. Es ist vorzugsweise so, dass die Sicherungskontur 12 höchstens zwölffach rotationssymmetrisch ausgestaltet ist.

Neben der Sicherungskontur 12 und dem Sicherungsbereich 11 ist es insbesondere denkbar, dass der Schaft 9 rotationssymmetrisch ausgebildet ist. Der Bohrer 4 mit rotationssymmetrischem Schaft 9 kann etwa in mehreren Winkelpositionen in den Aufnahmebereich 8 der Bohreraufnahme 2 aufnehmbar, insbesondere einsteckbar, sein. Dies ist etwa bei den exemplarisch dargestellten Bohrern in Fig. 2 der Fall.

Alternativ oder zusätzlich ist vorzugsweise vorgesehen, dass die Sicherungskontur 12 eine gleiche Anzahl an Schaft-Bogenabschnitten 13 und Schaft-Verbindungsabschnitten 14 aufweist. Wie etwa aus Fig. 1 hervorgeht, können jeweils zwei Schaft-Bogenabschnitte 13 über einen Schaft-Verbindungsabschnitt 14 untereinander verbunden sein. Alternativ oder zusätzlich ist es möglich, dass jeweils zwei Schaft-Verbindungsabschnitt 14 über einen Schaft-Bogenabschnitt 13 untereinander verbunden sind. Es ist in diesem Zusammenhang vorzugsweise vorgesehen, dass die Sicherungskontur 12 mindestens drei Schaft-Bogenabschnitte 13 und mindestens drei Schaft-Verbindungsabschnitte 14 aufweist.

Vorzugsweise sind die Schaft-Bogenabschnitte 13, insbesondere alle Schaft-Bogenabschnitte 13, im Wesentlichen gleich ausgebildet sind. Die Schaft-Bogenabschnitte 13 können insbesondere hinsichtlich deren Krümmung, deren Länge und/oder deren Orientierung zueinander im Wesentlichen gleich ausgebildet sein, wie beispielsweise aus Fig. 1 ersichtlich. Alternativ oder zusätzlich sind die Schaft-Verbindungsabschnitte 14, insbesondere alle Schaft-Verbindungsabschnitte 14, vorzugsweise im Wesentlichen gleich ausgebildet sind. Die Schaft-Verbindungsabschnitte 14 können insbesondere hinsichtlich deren Krümmung, deren Länge und/oder deren Orientierung zueinander im Wesentlichen gleich ausgebildet sein, wie es exemplarisch aus Fig. 1 hervorgeht.

In den Fig. 1 und 2 abgebildet und vorzugsweise umfasst die Sicherungskontur 12 genau drei Schaft-Bogenabschnitte 13 und genau drei Schaft-Verbindungsabschnitte 14. Die Schaft-Bogenabschnitte 13 sind dabei im Wesentlichen gleich hinsichtlich deren Krümmung, deren Länge und/oder deren Orientierung zueinander ausgebildet. Die Schaft-Verbindungsabschnitte 14 sind ebenfalls im Wesentlichen gleich hinsichtlich deren Krümmung, deren Länge und/oder deren Orientierung zueinander ausgebildet. Hier und vorzugsweise erstrecken sich die Schaft-Bogenabschnitte 13 jeweils über einen Winkelbereich von 120°. Die Schaft-Verbindungsabschnitte 14 sind, hier und vorzugsweise, ungekrümmt, also als Gerade, ausgebildet. Hieraus ergibt sich, hier und vorzugsweise, eine umlaufende Sicherungskontur 12, die als, insbesondere rotationssymmetrisches, eckenloses Dreieck ausgebildet ist.

Vorzugsweise sind die, insbesondere alle, Schaft-Verbindungsabschnitte 14 ungekrümmt ausgebildet. Die Schaft-Verbindungsabschnitte 14 weisen insoweit keine Krümmung auf und sind jeweils als gerader Abschnitt ausgebildet. Es ist vorzugsweise möglich, dass die Schaft-Verbindungsabschnitte 14 jeweils auf einem Schenkel eines gedachten, insbesondere gleichschenkligen, Vielecks angeordnet sind. In Fig. 1 etwa und vorzugsweise, sind die Schaft-Verbindungsabschnitte 14 jeweils auf einem Schenkel eines gedachten gleichschenkligen Dreiecks angeordnet.

Die, insbesondere alle, Schaft-Bogenabschnitte 13 stellen, hier und vorzugsweise, jeweils einen Teil eines Kreises dar. Die Schaft-Bogenabschnitte 13 können insoweit insbesondere eine konstante Krümmung über den jeweiligen Schaft-Bogenabschnitt 13 haben. Die Schaft-Bogenabschnitte 13 weisen dabei jeweils einen Mittelpunkt auf, der insbesondere von den anderen Mittelpunkten der Schaft-Bogenabschnitte 13 verschieden ist. Alternativ ist es ebenso denkbar, dass die Schaft-Bogenabschnitte 13 jeweils einen Teil einer Ellipse darstellen und/oder dass die Schaft-Bogenabschnitte 13 jeweils einen Teil einer Hyperbel oder einer Parabel darstellen, wobei die Schaft-Bogenabschnitte 13 hierbei jeweils einen Brennpunkt aufweisen, der insbesondere von den anderen Brennpunkten der Schaft-Bogenabschnitte 13 verschieden ist.

Weiter ist aus Fig. 2 exemplarisch ersichtlich und vorzugsweise vorgesehen, dass sich der Sicherungsbereich 11 nur über einen Teil der Länge des Schaftes 9, insbesondere endseitig, erstreckt. Der Schaft 9 weist daher noch einen oder mehrere weitere Schaftbereiche auf, die jeweils eine von der Sicherungskontur 12 abweichende Schaftkontur aufweisen. Die Schaftbereiche können in axialer Richtung des Bohrers 4 hintereinander angeordnet sein. In den Fig. 1 und 2 abgebildet und vorzugsweise erstreckt sich der Sicherungsbereich 11 nur über einen Teil, vorzugsweise mindestens 20%, weiter vorzugsweise mindestens 35%, weiter vorzugsweise mindestens 40%, der Länge des Schaftes 9. Der Sicherungsbereich 11 ist dabei endseitig, also an einem Ende, nämlich dem der Bohreraufnahme 2 zugewandten Ende, des Bohrers 4 und insbesondere des Schaftes 9, angeordnet. Wie etwa aus Fig. 2 hervorgeht, weist der Schaft 9 noch weitere Schaftbereiche mit jeweils unterschiedlichen Schaftkonturen auf. Die Schaftkonturen sind insbesondere die Umfangskontur des Schaftes 9 in dem jeweiligen Schaftbereich. Es ist hier und vorzugsweise vorgesehen, dass der Sicherungsbereich 11, der die Sicherungskontur 12 aufweist, gegenüber den anderen Schaftbereichen des Schaftes 9, welcher insbesondere an den Bohrschaft 42 angrenzt, am längsten ausgebildet ist.

Wie beispielsweise aus Fig. 1 ersichtlich und vorzugsweise sind im montierten Zustand der Sicherungsbereich 11 der Bohreraufnahme 2 zugewandt und der eine oder die mehreren weiteren Schaftbereiche der Bohreraufnahme 2 abgewandt. Hieraus ergibt sich die endseitige Anordnung des Sicherungsbereichs 11 an dem Bohrer 4.

Zur lösbaren Fixierung des Bohrers 4 in der Bohreraufnahme 2 kann vorzugsweise vorgesehen sein, dass die axiale Bohrersicherung 10 ein erstes Formschlusselement 16 aufweist. Insbesondere kann das erste Formschlusselement 16 ein rastendes erstes Formschlusselement 16 sein, so dass insbesondere der Bohrer 4 in die Bohreraufnahme 2 eingesteckt werden und verrasten kann.

Das Formschlusselement 16 ist gemäß Fig. 2 und vorzugsweise an, insbesondere in, dem Aufnahmebereich 8 angeordnet. Es ist vorzugsweise vorgesehen, dass die axiale Bohrersicherung 10 eine umlaufende erste Nut 17 aufweist, welche, hier und vorzugsweise, an, insbesondere in, dem Aufnahmebereich 8 angeordnet ist. Ferner ist vorzugsweise vorgesehen, dass die axiale Bohrersicherung 10 eine umlaufende erste Eingriffsnut 18 aufweist, welche, hier und vorzugsweise, an dem Schaft 9 angeordnet ist. Das, insbesondere als Sprengring ausgebildete, Formschlusselement ist in der ersten Nut 17 angeordnet (Fig. 2) und greift im montierten Zustand des Bohrers 4 in die erste Eingriffsnut 18 ein (Fig. 1).

Alternativ zu dieser Ausführung ist es ebenso denkbar, dass das Formschlusselement 16 an dem Schaft 9 angeordnet ist. Es kann in diesem Zusammenhang vorgesehen sein, dass die axiale Bohrersicherung 10 eine umlaufende erste Nut 17 aufweist, welche an dem Schaft 9 angeordnet ist. Die axiale Bohrersicherung 10 kann ferner eine umlaufende erste Eingriffsnut 18 aufweisen, welche an, insbesondere in, dem Aufnahmebereich 8 angeordnet ist. Auch hier kann das, insbesondere als Sprengring ausgebildete, Formschlusselement 16 in der ersten Nut 17 angeordnet sein und im montierten Zustand des Bohrers 4 in die erste Eingriffsnut 18 eingreifen.

Bei beiden Alternativen ist vorzugsweise vorgesehen, dass die an dem Schaft 9 angeordnete erste Nut 17 oder die an dem Schaft 9 angeordnete Eingriffsnut in einem mittleren Schaftbereich des Schaftes 9 angeordnet und der Sicherungsbereich 11 endseitig angeordnet ist. Der mittlere Schaftbereich ist, wie etwa aus Fig. 2 ersichtlich, hierdurch der Bohrerspitze 5 des Bohrers 4, insbesondere hinsichtlich des Sicherungsbereichs 11, zugewandt und der Sicherungsbereich 11 der Bohrerspitze 5 des Bohrers 4, insbesondere hinsichtlich des mittleren Schaftbereichs, abgewandt.

Wie beispielsweise in Fig. 1 und 2 dargestellt und vorzugsweise ist die erste Nut 17 zu einer Einstecköffnung 19 des Aufnahmebereichs 8, durch welche der Schaft 9 in den Aufnahmebereich 8 einsteckbar ist, höchstens 15 mm, vorzugsweise höchstens 7 mm, weiter vorzugsweise höchstens 2 mm, beabstandet.

Weiter ist hier und vorzugsweise vorgesehen, dass der Schaft 9 einen Bohreranschlag 20 und der Aufnahmebereich 8 einen korrespondierend ausgestalteten Aufnahmeanschlag 21 aufweisen. Der Bohreranschlag 20 und der Aufnahmeanschlag 21 liegen während der Montage, also etwa während der Bohrer 4 in die Bohreraufnahme 2 eingesteckt wird, zumindest zeitweise aneinander an. Es ist denkbar, dass der Bohreranschlag 20 und der Aufnahmeanschlag 21 im montierten Zustand aneinander anliegen, insbesondere wenn die axiale Bohrersicherung 10 den Bohrer 4 in der Bohreraufnahme 2 positioniert fixiert. Durch das zeitweise oder im montierten Zustand Anliegen kann die Position des Schaftes 9 in dem Aufnahmebereich 8 in axialer Richtung festgelegt sein. Vorzugsweise ist es möglich, dass der Bohreranschlag 20 endseitig an einer der Bohreraufnahme 2 zugewandten Stirnseite des Bohrers 4 angeordnet ist und dass der Aufnahmeanschlag 21 an einer der Einstecköffnung 19 abgewandten Seite des Aufnahmebereichs 8 angeordnet ist, wie es exemplarisch aus der Fig. 1 hervorgeht, in welcher der Bohreranschlag 20 durch die Stirnseite und der Aufnahmeanschlag 21 durch den Grund des Aufnahmebereichs 8 gebildet sind.

Vorzugsweise ist vorgesehen, dass der Aufnahmebereich 8 zumindest über einen Teil seiner Länge eine Aufnahmekontur 22 aufweist und dass der Aufnahmebereich 8, insbesondere die Aufnahmekontur 22, im mathematischen Sinne ähnlich zu dem Sicherungsbereich 11, insbesondere der Sicherungskontur 12, ausgebildet ist. Hier und vorzugsweise, ist die Aufnahmekontur 22 als innere und/oder umlaufende Aufnahmekontur 22 ausgebildet. Die Aufnahmekontur 22 ist insbesondere die, vorzugsweise innere, Umfangskontur zumindest eines Teils des Aufnahmebereichs 8.

"Im mathematischen Sinne ähnlich" bedeutet, dass ein Bereich oder eine Kontur auf einen anderen Bereich beziehungsweise eine andere Kontur durch Skalierung, insbesondere nur durch Skalierung, also etwa durch die Streckung in alle Richtungen, abbildbar ist. Hier ist insoweit der Aufnahmebereich 8 oder die Aufnahmekontur 22 auf den Sicherungsbereich 11 beziehungsweise die Sicherungskontur 12 abbildbar, indem dieser oder diese gestreckt, konkret verkleinert, wird. Dies setzt insbesondere voraus, dass die Längenverhältnisse einander entsprechender Seiten des Bereichs oder der Kontur und die Winkelverhältnisse entsprechender Winkel des Bereichs oder der Kontur gleich groß sind. Hier weist der Aufnahmebereich 8 über eine gewisse Länge eine Aufnahmekontur 22 auf, welche etwas größer, jedoch hinsichtlich deren Längenverhältnissen und Winkelverhältnissen im Wesentlichen gleich zu der Sicherungskontur 12 ausgebildet ist. Hierdurch kann eine entsprechende Passung erreicht werden, welche die Aufnahme des Bohrers 4 in dem Aufnahmebereich 8 ermöglicht.

Alternativ oder zusätzlich ist es vorzugsweise möglich, dass das Spiel zwischen dem Teil des Aufnahmebereichs 8, der die Aufnahmekontur 22 aufweist, und dem Teil des Sicherungsbereichs 11, der die Sicherungskontur 12 aufweist, zumindest über eine gewisse Länge, vorzugsweise mindestens 50%, weiter vorzugsweise mindestens 80%, des Teils des Sicherungsbereichs 11, der die Sicherungskontur 12 aufweist, höchstens 0,2 mm, vorzugsweise höchstens 0,1 mm, weiter vorzugsweise höchstens 0,05 mm, beträgt.

Es ist alternativ oder zusätzlich möglich, dass der Aufnahmebereich 8, insbesondere die Aufnahmekontur 22, derart korrespondierend zu dem Sicherungsbereich 11 des Schafts 9, insbesondere der Sicherungskontur 12, ausgebildet ist, dass der Sicherungsbereich 11 während des Bohrens mit der Bohrvorrichtung 1 an zumindest drei Anlagegeraden den Teil des Aufnahmebereichs 8, der die Aufnahmekontur 22 aufweist, kontaktiert. Über die Anlagegeraden kann die Kraft von der Bohreraufnahme 2 auf den Bohrer 4 während des Bohrvorgangs übertragbar sein. Diese Ausgestaltung kann etwa dadurch erreicht werden, dass das Spiel zwischen dem Teil des Aufnahmebereichs 8, der die Aufnahmekontur 22 aufweist, und dem Teil des Sicherungsbereichs 11, der die Sicherungskontur 12 aufweist, entsprechend vorstehender Beschreibung vorgesehen ist. Insbesondere durch das Spiel kann der Bohrer 4 gegenüber der Bohreraufnahme 2 während des Bohrvorgangs um einen kleinen Winkelbereich, insbesondere einem Winkelbereich von höchstens 2°, vorzugsweise höchstens 1°, weiter vorzugsweise höchstens 0,8°, verdrehen, so dass die entsprechenden Teile der Bereiche an den zumindest drei Anlagegerade kontaktieren. Es ist möglich, dass die Anlagegeraden im Wesentlichen parallel zu der Hauptachse des Schaftes 9 verlaufen und/oder dass die Anlagegerade in gleichen Winkeln zueinander beabstandet sind. Ferner ist es möglich, dass die Anlagegeraden eine gewisse Querausdehnung aufweisen.

Zur verbesserten Aufnahme des Schaftes 9 mit Sicherungskontur 12 ist die Aufnahmekontur 22 nach Art eines Gegenstücks der Sicherungskontur 12 ausgebildet. Auf alle Ausführungen und Merkmale, welche im Zusammenhang mit der Sicherungskontur 12 beschrieben sind, kann daher ganz allgemein verwiesen werden.

Weiter ist hier und vorzugsweise vorgesehen, dass die Bohrvorrichtung 1 eine Hülse 23 aufweist. Zur Befestigung der Hülse 23, weist die Bohrvorrichtung 1, insbesondere die Bohreraufnahme 2, vorzugsweise einen Aufsteckbereich 24 und die Hülse 23 eine Aufsteckausnehmung 25 auf. Über die Aufsteckausnehmung 25 ist die Hülse 23 auf den Aufsteckbereich 24 bedarfsweise auf- und absteckbar. Die Aufsteckausnehmung 25 ist insbesondere im Inneren der Hülse 23 ausgebildet. Der Aufsteckbereich 24 ist insbesondere an einer äußeren Fläche der Bohreraufnahme 2 ausgebildet. Der Aufsteckbereich 24 kann, wie etwa aus Fig. 1 ersichtlich, den Aufnahmebereich 8 zumindest teilweise, insbesondere in radialer Richtung der Bohreraufnahme 2, umgeben.

In Fig. 1 ist etwa die Hülse 23 aufgesteckt. Um ein Abrutschen der Hülse 23 von dem Aufsteckbereich 24 zu verhindern, ist die Hülse 23 vorzugsweise über eine axiale Hülsensicherung 26 lösbar in axialer Richtung fixiert. Es hat sich insbesondere bewährt, dass die axiale Hülsensicherung 26 gleich oder zumindest ähnlich zu der axialen Bohrersicherung 10 ausgebildet ist. Auf alle Ausführungen und Merkmale, welche im Zusammenhang mit der axialen Bohrersicherung 10 beschrieben sind, kann daher ganz allgemein verwiesen werden.

Es hat sich insbesondere im Zusammenhang mit der axialen Hülsensicherung 26 als vorzugsweise herausgestellt, dass die axiale Hülsensicherung 26 ein, insbesondere rastendes, zweites Formschlusselement 27 aufweist, das an der Aufsteckausnehmung 25 angeordnet ist, wie es etwa in Fig. 1 und 2 der Fall ist. Hier und vorzugsweise weist die axiale Hülsensicherung 26 eine umlaufende zweite Nut 28 und eine umlaufende zweite Eingriffsnut 29 auf, wobei die zweite Nut 28 an, insbesondere in, der Aufsteckausnehmung 25 der Hülse 23 und die zweite Eingriffsnut 29 an dem Aufsteckbereich 24 der Bohreraufnahme 2 angeordnet ist. Das zweite Formschlusselement 27, welches hier und vorzugsweise als Sprengring ausgebildet ist, ist in der zweiten Nut 28 angeordnet (Fig. 2) und greift im montierten Zustand in die zweite Eingriffsnut 29 ein (Fig. 1).

Alternativ hierzu ist es, wie auch schon im Zusammenhang mit der axialen Bohrersicherung 10 erläutert, ebenso denkbar, dass die umlaufende zweite Nut 28 an dem Aufsteckbereich 24 der Bohreraufnahme 2 und die umlaufende zweite Eingriffsnut 29 an, insbesondere in, der Aufsteckausnehmung 25 der Hülse 23 angeordnet sind. Das zweite Formschlusselement 27 ist in diesem Fall entsprechend in der zweiten Nut 28 an der Bohreraufnahme 2 angeordnet und greift im montierten Zustand in die zweite Eingriffsnut 29 der Hülse 23 ein.

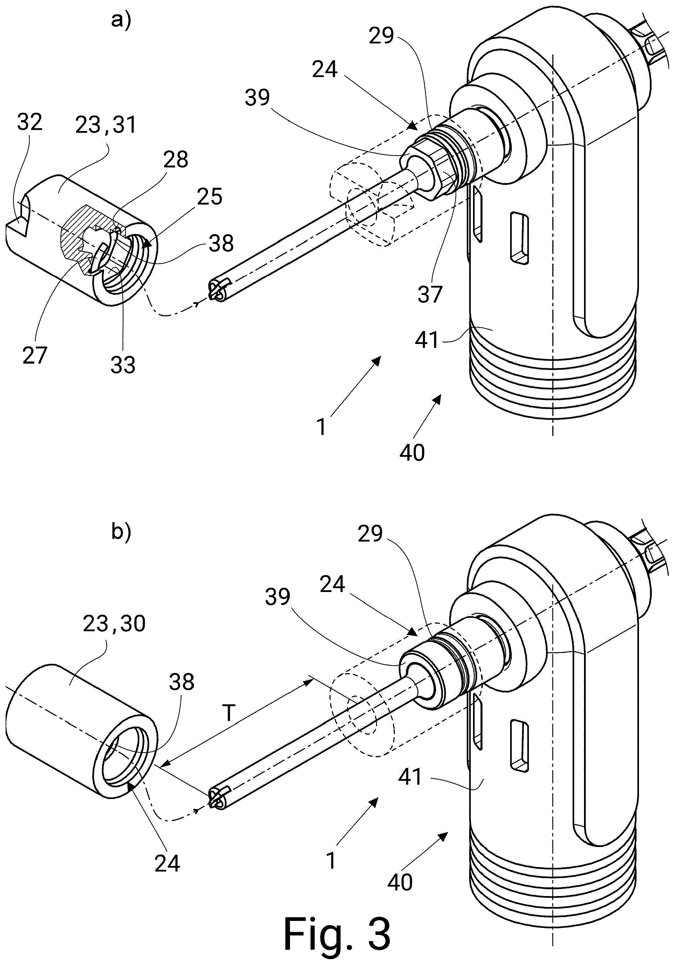

Der Hülse 23 können unterschiedliche Aufgaben und Funktionen zukommen, weshalb diese je nach Anwendungsfall auszugestalten ist. Es hat sich etwa als überaus vorzugsweise herausgestellt, dass die Hülse 23 als Abstandhülse 30 zur Festlegung einer bestimmten Bohrtiefe T ausgebildet ist, wie es exemplarisch Fig. 3b) zu entnehmen ist. Hier und vorzugsweise ergibt sich die Bohrtiefe T aus der Längendifferenz des in der Bohreraufnahme 2 aufgenommenen, insbesondere eingesteckten, Bohrers 4 und der an der Bohreraufnahme 2 angeordneten, insbesondere aufgesteckten, Hülse 23. Während eines Bohrvorgangs wird so lange gebohrt, bis die Stirnfläche der Hülse 23 an ein Baumaterial, wie etwa eine Wand, anschlägt. Es ist möglich, dass durch geeignete Wahl einer als Abstandshülse ausgebildeten Hülse 23 die Bohrtiefe T bedarfsweise festlegbar ist. Hier und vorzugsweise ist die Hülse 23 rotationssymmetrisch ausgebildet.

Alternativ ist es ebenso denkbar, dass die Hülse 23 als Bohrhülse 31 zum Bohren in ein Baumaterial ausgebildet ist, wie es etwa bei der in Fig. 1 sowie 3a) dargestellten Hülse 23 der Fall ist. In diesem Zusammenhang umfasst "Bohrhülse" 31 auch Hülsen 23, die ein Baumaterial, wie etwa eine Rigipswand, Holz, o.ä., eher schneiden anstelle es zu bohren. Hier und vorzugsweise weist die Hülse 23 zumindest eine, hier und vorzugsweise zwei gegenüberliegende, Bohrflächen 32 auf, welche an einer der Bohreraufnahme 2 abgewandten Seite, insbesondere Stirnfläche, der Hülse 23 angeordnet ist. Hier und vorzugsweise dient der Bohrer 4 als Zentrierbohrer für die Hülse 23. Um die als Bohrhülse 31 ausgebildete Hülse 23 im montierten Zustand, insbesondere während des Bohrvorgangs, gegen Verdrehen gegenüber der Bohreraufnahme 2 zu sichern, weist die Aufsteckausnehmung 25 zumindest über einen Teil ihrer Länge eine Hülsen-Sicherungskontur 33 auf (Fig. 3a). Die Hülsen-Sicherungskontur 33 ist, hier und vorzugsweise, als innere und/oder umlaufende Hülsen-Sicherungskontur 33 ausgebildet. Die Hülsen-Sicherungskontur 33 ist insbesondere die, vorzugsweise innere, Umfangskontur zumindest eines Teils der Aufsteckausnehmung 25. Die Hülsen-Sicherungskontur 33 weist mehrere gekrümmte Hülsen-Bogenabschnitte 34 und mehrere Hülsen-Verbindungsabschnitte 35, welche die Hülsen-Bogenabschnitte 34 an mehreren Hülsen-Verbindungspunkten 36 untereinander verbinden, auf. Die Hülsen-Bogenabschnitte 34 und die Hülsen-Verbindungsabschnitte 35 gehen in den Hülsen-Verbindungspunkten 36 tangential ineinander über. Dies ist beispielsweise in Fig. 1 dargestellt.

Es hat sich insbesondere bewährt, dass die Hülsen-Sicherungskontur 33 zwar abweichend dimensioniert, jedoch nach Art der Sicherungskontur 12 ausgebildet ist. Auf alle Ausführungen und Merkmale, welche im Zusammenhang mit der Sicherungskontur 12 beschrieben sind, kann daher ganz allgemein verwiesen werden.

Insbesondere kann die Hülsen-Sicherungskontur 33 über die Länge des Teils der Aufsteckausnehmung 25, welcher die Hülsen-Sicherungskontur 33 aufweist, gleichbleiben ausgebildet sein oder variieren, etwa durch bereichsweise Ausnehmungen, etc.

Die vorzugsweise Ausgestaltung der Hülsen-Sicherungskontur 33 ergibt sich insbesondere aus der Schnittdarstellung der Fig. 1 (A-A). Es ist vorgesehen, dass die Hülsen-Sicherungskontur 33 mehrere gekrümmte Hülsen-Bogenabschnitte 34 und mehrere Hülsen-Verbindungsabschnitte 35, welche die Hülsen-Bogenabschnitte 34 an mehreren Hülsen-Verbindungspunkten 36 untereinander verbinden, aufweist. Insbesondere ist vorgesehen, dass jeder der Hülsen-Bogenabschnitte 34 durch jeweils zwei Hülsen-Verbindungsabschnitte 35 mit zumindest einem, hier und vorzugsweise mit zwei, Hülsen-Bogenabschnitt verbunden ist. Die Hülsen-Sicherungskontur 33 ist, hier und vorzugsweise, als umlaufende und/oder innere Hülsen-Sicherungskontur 33 ausgebildet.

Die Hülsen-Bogenabschnitte 34 weisen eine Krümmung auf. Die Krümmung kann dabei über die Länge des jeweiligen Hülsen-Bogenabschnittes 34 vorzugsweise konstant sein. Die Krümmung der einzelnen Hülsen-Bogenabschnitte 34 kann insbesondere gleich groß zu der Krümmung der anderen Hülsen-Bogenabschnitte 34 sein. Vorzugsweise sind die Krümmungen der Hülsen-Bogenabschnitte 34 in die gleiche Richtung bezogen auf den jeweiligen Hülsen-Bogenabschnitt ausgebildet.

Die Hülsen-Verbindungsabschnitte 35 sind, hier und vorzugsweise, ungekrümmt ausgebildet, weisen insoweit keine Krümmung auf. Es ist jedoch ebenso denkbar, dass die Hülsen-Verbindungsabschnitte 35 eine Krümmung aufweisen, welche insbesondere von der Krümmung der Hülsen-Bogenabschnitte 34 abweicht. Es ist insbesondere möglich, dass die Krümmung der Hülsen-Verbindungsabschnitte 35 der Krümmung der Hülsen-Bogenabschnitte 34 entgegengesetzt ist. Vorzugsweise sind die Krümmungen der Hülsen-Verbindungsabschnitte 35 in die gleiche Richtung bezogen auf den jeweiligen Hülsen-Verbindungsabschnitt ausgebildet.

Die Hülsen-Bogenabschnitte 34 gehen jeweils in zwei Hülsen-Verbindungspunkten 36 in zwei unterschiedlichen Hülsen-Verbindungsabschnitten 35 über. Im Zusammenhang mit den Hülsen-Verbindungspunkten 36 ist es vorzugsweise möglich, dass die, insbesondere alle, Hülsen-Verbindungspunkte 36 der Hülsen-Sicherungskontur 33 zueinander zumindest 0,7 mm, vorzugsweise mindestens 1,4 mm, weiter vorzugsweise mindestens 2,1 mm, beabstandet sind. Insbesondere können jeweils zwei Hülsen-Verbindungspunkte 36, die an einen der Hülsen-Bogenabschnitte 34 angrenzen, zueinander zumindest 0,7 mm, vorzugsweise mindestens 1,4 mm, weiter vorzugsweise mindestens 2,1 mm, beabstandet sein. Für den vorzugsweisen Fall, dass die Hülsen-Bogenabschnitte 34 als Teil eines Kreises ausgebildet sind, entspräche dies einem Krümmungsradius der Hülsen-Bogenabschnitte 34 von ungefähr zumindest 0,5 mm, vorzugsweise ungefähr mindestens 1 mm, weiter vorzugsweise ungefähr mindestens 1,5 mm.

Insbesondere ist vorzugsweise vorgesehen, dass die Hülsen-Sicherungskontur 33 rotationssymmetrisch ausgestaltet ist. Hieraus kann sich zumindest in dem Teil der Aufsteckausnehmung 25, welcher die Hülsen-Sicherungskontur 33 aufweist, eine rotationssymmetrische Aufsteckausnehmung 25 ergeben. Aus den Fig. 1 und 2 ersichtlich und vorzugsweise ist die Hülsen-Sicherungskontur 33 mindestens vierfach, vorzugsweise sechsfach, rotationssymmetrisch ausgestaltet. Es ist vorzugsweise so, dass die Sicherungskontur 12 höchstens zwölffach rotationssymmetrisch ausgestaltet ist.

Wie aus den Fig. 1 und 2 ersichtlich und vorzugsweise, weist die Hülsen-Sicherungskontur 33 eine gleiche Anzahl, insbesondere mindestens vier, an Hülsen-Bogenabschnitten 34 und Hülsen-Verbindungsabschnitte 35 auf. Alternativ oder zusätzlich können die, insbesondere alle, Hülsen-Bogenabschnitte 34 im Wesentlichen gleich ausgebildet sein und/oder die, insbesondere alle, Hülsen-Verbindungsabschnitte 35 im Wesentlichen gleich ausgebildet sind.

In den Fig. 1, 2 und 3a) und vorzugsweise weist die Hülsen-Sicherungskontur 33 genau sechs Hülsen-Bogenabschnitte 34 und genau sechs Hülsen-Verbindungsabschnitte 35 auf. Die Hülsen-Bogenabschnitte 34 sind dabei im Wesentlichen gleich hinsichtlich deren Krümmung, deren Länge und/oder deren Orientierung zueinander ausgebildet. Die Hülsen-Verbindungsabschnitte 35 sind ebenfalls im Wesentlichen gleich hinsichtlich deren Krümmung, deren Länge und/oder deren Orientierung zueinander ausgebildet. Hier und vorzugsweise erstrecken sich die Hülsen-Bogenabschnitte 34 jeweils über einen Winkelbereich von 60°. Die Hülsen-Verbindungsabschnitte 35 sind, hier und vorzugsweise, ungekrümmt, also als Gerade, ausgebildet. Hieraus ergibt sich, hier und vorzugsweise, eine umlaufende Hülsen-Sicherungskontur 33, die als, insbesondere rotationssymmetrisches, eckenloses Sechseck ausgebildet ist.

Weiter ist hier und vorzugsweise vorgesehen, dass die, insbesondere alle, Hülsen-Verbindungsabschnitte 35 ungekrümmt, also jeweils als gerade Abschnitte, ausgebildet sind. Es ist hier und vorzugsweise möglich, dass die, insbesondere alle, Hülsen-Verbindungsabschnitte 35 jeweils auf einem Schenkel eines gedachten, insbesondere gleichschenkligen, Vielecks angeordnet sind. In Fig. 1 ist vorzugsweise abgebildet, dass die Hülsen-Verbindungsabschnitte 35 jeweils auf einem Schenkel eines gedachten gleichschenkligen Sechsecks angeordnet sind.

Alternativ oder zusätzlich stellen die Hülsen-Bogenabschnitte 34 jeweils einen Teil einer Ellipse oder eines Kreises dar und weisen jeweils einen Mittelpunkt, der insbesondere von den anderen Mittelpunkten der Hülsen-Bogenabschnitte 34 verschieden ist, auf. In Fig. 1 ist vorzugsweise dargestellt, dass die Hülsen-Bogenabschnitte 34 jeweils einen Teil eines Kreises darstellen mit konstanter Krümmung. Alternativ oder zusätzlich stellen die Hülsen-Bogenabschnitte 34 jeweils einen Teil einer Hyperbel oder einer Parabel dar und weisen jeweils einen Brennpunkt, der insbesondere von den anderen Brennpunkten der Hülsen-Bogenabschnitte 34 verschieden ist, auf.

Um die Hülse 23 entsprechend an der Bohreraufnahme 2 aufstecken zu können, weist der Aufsteckbereich 24, hier und vorzugsweise, zumindest über einen Teil seiner Länge eine Aufsteckkontur 37 auf. Hier und vorzugsweise, ist die Aufsteckkontur 37 als äußere und/oder umlaufende Aufsteckkontur 37 ausgebildet. Die Aufsteckkontur 37 ist insbesondere die, vorzugsweise äußere, Umfangskontur zumindest eines Teils des Aufsteckbereichs 24. Der Aufsteckbereich 24, insbesondere die Aufsteckkontur 37, kann im mathematischen Sinne ähnlich zu der Aufsteckausnehmung 25, insbesondere der Hülsen-Sicherungskontur 33, ausgebildet sein. Aus Fig. 3a) ist exemplarisch ersichtlich, dass der Aufsteckbereich 24 der Bohreraufnahme 2 über eine gewisse Länge eine Aufsteckkontur 37 aufweist, welche etwa kleiner, jedoch hinsichtlich deren Längenverhältnissen und Winkelverhältnissen im Wesentlichen gleich zu der Hülsen-Sicherungskontur 33 ausgebildet ist.

Alternativ oder zusätzlich ist es vorzugsweise möglich, dass das Spiel zwischen dem Teil des Aufsteckbereichs 24, der die Aufsteckkontur 37 aufweist, und dem Teil der Aufsteckausnehmung 25, der die Hülsen-Sicherungskontur 33 aufweist, zumindest über eine gewisse Länge, vorzugsweise mindestens 50%, weiter vorzugsweise mindestens 80%, des Teils der Aufsteckausnehmung 25, der die Hülsen-Sicherungskontur 33 aufweist, höchstens 0,2 mm, vorzugsweise höchstens 0,1 mm, weiter vorzugsweise höchstens 0,05 mm, beträgt.

Alternativ oder zusätzlich ist der Aufsteckbereich 24, insbesondere die Aufsteckkontur 37, derart korrespondierend zu der Aufsteckausnehmung 25, insbesondere der Hülsen-Sicherungskontur 33, ausgebildet, dass der Teil der Aufsteckausnehmung 25, der die Hülsen-Sicherungskontur 33 aufweist, während des Bohrens mit der Bohrvorrichtung 1 an zumindest drei, hier und vorzugsweise sechs, Anlagegeraden den Teil des Aufsteckbereichs 24, der die Aufsteckkontur 37 aufweist, kontaktiert. Über die Anlagegeraden kann die Kraft von der Bohreraufnahme 2 auf die als Bohrhülse 31 ausgebildete Hülse 23 während des Bohrvorgangs übertragbar sein. Diese Ausgestaltung kann etwa dadurch erreicht werden, dass das Spiel Aufsteckbereich 24 und Aufsteckausnehmung 25 entsprechend vorstehender Beschreibung vorgesehen ist. Insbesondere durch das Spiel kann die Hülse 23 gegenüber der Bohreraufnahme 2 während des Bohrvorgangs um einen kleinen Winkelbereich, insbesondere einem Winkelbereich von höchstens 2°, vorzugsweise höchstens 1°, weiter vorzugsweise höchstens 0,8°, verdrehen, so dass die entsprechenden Teile der Bereiche an den zumindest drei, hier und vorzugsweise sechs, Anlagegerade kontaktieren. Es ist möglich, dass die Anlagegeraden im Wesentlichen parallel zu der Hauptachse der Hülse 23 verlaufen und/oder dass die Anlagegerade in gleichen Winkeln zueinander beabstandet sind. Ferner ist es möglich, dass die Anlagegeraden eine gewisse Querausdehnung aufweisen.

Obschon in den Fig. 3a) und 3b) der Aufsteckbereich 24 in Abhängigkeit von der Ausgestaltung der Hülse 23 ausgebildet ist, so ist es grundsätzlich möglich, dass der Aufsteckbereich 24 einer Bohrvorrichtung 1 derart ausgebildet ist, dass wahlweise eine Abstandshülse oder eine Bohrhülse 31 auf die Bohreraufnahme 2 aufsteckbar ist. Dies ist etwa bei dem Aufsteckbereich 24 der Fig. 1, 2 und 3a) der Fall. Hier und vorzugsweise, ist der Aufsteckbereich 24 und die jeweilige Aufsteckausnehmung 25 der Abstandshülse oder der Bohrhülse 31 derart ausgebildet, dass im montierten Zustand die Abstandhülse 30 gegen Verdrehen ungesichert und die Bohrhülse 31 gegen Verdrehen gesichert wird.

Zur verbesserten Aufnahme der Hülse 23 mit Hülsen-Sicherungskontur 33 ist die Aufsteckkontur 37 nach Art eines Gegenstücks der Hülsen-Sicherungskontur 33 ausgebildet. Auf alle Ausführungen und Merkmale, welche im Zusammenhang mit der Hülsen-Sicherungskontur 33 beschrieben sind, kann daher ganz allgemein verwiesen werden.

Ferner ist vorzugsweise vorgesehen, dass die Hülse 23, insbesondere die Aufsteckausnehmung 25, einen Hülsenanschlag 38 und der Aufsteckbereich 24 einen korrespondierend ausgestalteten Aufsteckanschlag 39 aufweisen, welche im montierten Zustand und/oder während der Montage zumindest zeitweise aneinander anliegen. Hierdurch kann die Position der Hülse 23 an dem Aufsteckbereich 24 in axialer Richtung festgelegt sein. Aus Fig. 3a), 3b) geht etwa der Hülsenanschlag 38 und der Aufsteckanschlag 39 hervor. Hier und vorzugsweise ist der Hülsenanschlag 38 im Inneren der Hülse 23, insbesondere in der Aufsteckausnehmung 25, angeordnet und der Aufsteckanschlag 39 endseitig an einer dem Bohrer 4 zugewandten Stirnseite der Bohreraufnahme 2 angeordnet ist. Hier und vorzugsweise ist der Hülsenanschlag 38 durch den Grund der Aufsteckausnehmung 25 und der Aufsteckanschlag 39 durch die Stirnseite des Aufsteckbereichs 24 gebildet.

Wie aus den Fig. 1, 2, 3a) und 3b) ersichtlich und vorzugsweise weist die Bohrvorrichtung 1 ferner eine Absauganordnung 40 auf. Die Absauganordnung 40 kann ein Absauggehäuse 41 aufweisen. Die Bohreraufnahme 2 kann in dem Absauggehäuse 41 drehbar gelagert sein (Fig. 1). Das Absauggehäuse 41 kann einen Anschluss für einen Sauger aufweisen.

Neben der Bohrvorrichtung 1 wird ferner ein Bohrer 4, insbesondere Gestein-Bohrer, vorgeschlagen. Der Bohrer 4 weist einen Schaft 9 zur Anordnung an einem Aufnahmebereich 8 einer Bohreraufnahme 2 einer Bohrvorrichtung 1, insbesondere einer vorschlagsgemäßen Bohrvorrichtung 1, auf, wobei der Schaft 9 einen Sicherungsbereich 11 zur Sicherung des montierten Bohrers 4 gegenüber der Bohreraufnahme 2 gegen Verdrehen aufweist, wobei der Sicherungsbereich 11 entlang dessen Länge eine Sicherungskontur 12 aufweist, wobei die Sicherungskontur 12 mehrere gekrümmte Schaft-Bogenabschnitte 13 und mehrere Schaft-Verbindungsabschnitte 14, welche die Schaft-Bogenabschnitte 13 an mehreren Schaft-Verbindungspunkten 15 untereinander verbinden, aufweist.

Wesentlich ist in diesem Zusammenhang, dass die Schaft-Bogenabschnitte 13 und die Schaft-Verbindungsabschnitte 14 in den Schaft-Verbindungspunkten 15 tangential ineinander übergehen.

Der vorschlagsgemäße Bohrer 4 kann für eine vorschlaggemäße Bohrvorrichtung 1 sein, so dass auf alle Ausführungen zu der vorschlagsgemäßen Bohrvorrichtung 1, insbesondere Saugbohrvorrichtung, verwiesen werden darf.

Es ist denkbar, dass der Bohrer 4, wie exemplarisch in den Fig. 1, 2, 3a) und 3b) ersichtlich, einen Bohrschaft 42 mit einem stirnseitigen Schneideinsatz 6 aufweist. Der Bohrschaft 42 ist neben dem Schaft 9 des Bohrers 4 angeordnet, insbesondere auf der der Bohreraufnahme 2 abgewandten Seite des Bohrers 4. Der Bohrschaft 42 ist derart ausgebildet, dass dieser während des Bohrvorgangs den Bohrer 4 zentriert und/oder Baumaterial abführt.

Es ist ferner möglich, dass der Bohrer 4 einen inneren Saugkanal 7 aufweist. Der Saugkanal 7 erstreckt sich durch den Bohrschaft 42 bis hin und zumindest teilweise durch den Schaft 9 (Fig. 1). Der Saugkanal 7 kann als Zylinderausnehmung ausgebildet sein. Der Saugkanal 7 kann gerade ausgebildet sein. Der Saugkanal 7 kann der Bohrergröße angepasst sein (Fig. 2). Der Schaft 9 kann unabhängig von der Bohrergröße, insbesondere für unterschiedliche Bohrergrößen gleich, ausgebildet sein.

Vorgeschlagen wird ferner auch eine Bohreraufnahme 2, insbesondere einer vorschlagsgemäßen Bohrvorrichtung 1. Die Bohreraufnahme 2 weist einen Anschlussbereich 3 zum Anschluss an eine Bohrmaschine und einen Aufnahmebereich 8 zur, insbesondere steckbaren, Aufnahme des Bohrers 4 auf.

Wesentlich für die Bohreraufnahme 2 ist, dass die Bohreraufnahme 2 derart ausgebildet ist, dass in oder an dem Aufnahmebereich 8 ein vorschlagsgemäßer Bohrer 4 aufnehmbar ist.

Die vorschlagsgemäße Bohreraufnahme 2 kann für eine vorschlagsgemäße Bohrvorrichtung 1 sein, so dass auf alle Ausführungen zu der vorschlagsgemäßen Bohrvorrichtung 1, insbesondere Saugbohrvorrichtung, verwiesen werden darf. Ferner kann die vorschlagsgemäß Bohreraufnahme 2 einen vorschlagsgemäßen Bohrer 4 aufnehmen, so dass auf alle Ausführungen zu dem vorschlagsgemäßen Bohrer 4 verwiesen werden darf.

Vorgeschlagen wird darüber hinaus eine Hülse 23, insbesondere eine Abstands- oder Bohrhülse 31. Die Hülse 23 weist eine Aufsteckausnehmung 25 zum Aufstecken an einem Aufsteckbereich 24 einer Bohreraufnahme 2 einer Bohrvorrichtung 1, insbesondere einer vorschlagsgemäßen Bohrvorrichtung 1, auf, wobei die Aufsteckausnehmung 25 über zumindest einen Teil ihrer Länge eine Hülsen-Sicherungskontur 33 zur Sicherung der montierten Hülse 23 gegenüber der Bohreraufnahme 2 gegen Verdrehen aufweist, wobei die Hülsen-Sicherungskontur 33 mehrere gekrümmte Hülsen-Bogenabschnitte 34 und mehrere Hülsen-Verbindungsabschnitte 35, welche die Hülsen-Bogenabschnitte 34 an mehreren Hülsen-Verbindungspunkten 36 untereinander verbinden, aufweist.

Wesentlich in diesem Zusammenhang ist, dass die Hülsen-Bogenabschnitte 34 und die Hülsen-Verbindungsabschnitte 35 in den Hülsen-Verbindungspunkten 36 tangential ineinander übergehen.

Die vorschlagsgemäße Hülse 23 kann für eine vorschlagsgemäße Bohrvorrichtung 1 sein. Auf alle Ausführungen zu der vorschlagsgemäßen Bohrvorrichtung 1, insbesondere Saugbohrvorrichtung, dem Bohrer 4, insbesondere Gestein-Bohrer, und der vorschlagsgemäßen Bohreraufnahme 2 darf verwiesen werden.

Vorgeschlagen wird überdies ein Verfahren zur Fertigung eines vorschlagsgemäßen Bohrers 4, wobei der Sicherungsbereich 11 des Schaftes 9, der die Sicherungskontur 12 aufweist, mit einem Drehmeißel oder insbesondere mit einem Fräser, vorzugsweise einem Schaftfräser, gefertigt wird und der Drehmeißel oder der Fräser Material in Richtung quer zur Hauptachse des Schaftes 9 abträgt.

Auf alle Ausführungen zu dem vorschlagsgemäßen Bohrer 4 und auch zu der vorschlagsgemäßen Bohrvorrichtung 1, insbesondere Saugbohrvorrichtung, der Bohreraufnahme 2 und der Hülse 23 darf verwiesen werden.

Es ist insbesondere möglich, dass der Sicherungsbereich 11 des Schaftes 9, insbesondere die Sicherungskontur 12, in einem einzigen Arbeitsschritt, insbesondere nachbearbeitungsfrei, gefertigt wird. Weitere Nachbearbeitung entfällt hierbei.

Es ist möglich, dass die Hauptachse des Fräsers, während der Fräser Material abträgt, im Wesentlichen parallel zur Hauptachse des Schaftes 9 orientiert ist. Es ist auch möglich, dass die Hauptachse des Drehmeißels, während der Drehmeißel Material abträgt, im Wesentlichen quer, insbesondere orthogonal, zur Hauptachse des Schaftes 9 orientiert ist.

Vorgeschlagen wird zudem ein Verfahren zur Fertigung einer vorschlagsgemäßen Bohreraufnahme 2, wobei der Teil des Aufnahmebereichs 8 der Bohreraufnahme 2, der die Aufnahmekontur 22 aufweist, mit einem Fräser, insbesondere einem Schaftfräser, gefertigt wird und der Fräser Material in Richtung quer zur Hauptachse des Aufnahmebereichs 8 abträgt.

Auf alle Ausführungen zu der vorschlagsgemäßen Bohreraufnahme 2 und auch der Bohrvorrichtung 1, dem Bohrer 4, der Hülse 23 und dem Verfahren zur Fertigung eines Bohrers 4 darf verwiesen werden.

Vorgeschlagen wird ferner ein Verfahren zur Fertigung einer vorschlagsgemäßen Hülse 23, wobei der Teil der Aufsteckausnehmung 25 der Hülse 23, der die Hülsen-Sicherungskontur 33 aufweist, mit einem Fräser, insbesondere einem Schaftfräser, gefertigt wird, wobei der Fräser Material in Richtung quer zur Hauptachse der Aufsteckausnehmung 25 abträgt.

Auf alle Ausführungen zu der vorschlagsgemäßen Bohrvorrichtung 1, dem vorschlagsgemäßen Bohrer 4, der vorschlagsgemäßen Bohreraufnahme 2, der vorschlagsgemäßen Hülse 23 sowie den vorschlagsgemäßen Verfahren darf verwiesen werden.

## Patentansprüche

1. Bohrvorrichtung, insbesondere Saugbohrvorrichtung, zum Bohren eines Bohrloches,
wobei die Bohrvorrichtung (1) eine Bohreraufnahme (2) und einen Bohrer (4) aufweist,
wobei die Bohreraufnahme (2) einen Anschlussbereich (3) zum Anschluss der Bohrvorrichtung (1) an eine Bohrmaschine und einen Aufnahmebereich (8) zur Aufnahme des Bohrers (4) aufweist,
wobei der Bohrer (4) einen Schaft (9) aufweist, der im montierten Zustand von dem Aufnahmebereich (8) aufgenommen, insbesondere in den Aufnahmebereich (8) eingesteckt, und über eine axiale Bohrersicherung (10) lösbar in axialer Richtung fixiert ist,
wobei der Schaft (9) einen Sicherungsbereich (11) aufweist, wobei der Sicherungsbereich (11) im montierten Zustand den Bohrer (4) gegenüber der Bohreraufnahme (2) gegen Verdrehen sichert, wobei der Sicherungsbereichs (11) entlang dessen Länge eine Sicherungskontur (12) aufweist, wobei die Sicherungskontur (12) mehrere gekrümmte Schaft-Bogenabschnitte (13) und mehrere Schaft-Verbindungsabschnitte (14), welche die Schaft-Bogenabschnitte (13) an mehreren Schaft-Verbindungspunkten (15) untereinander verbinden, aufweist,
**dadurch gekennzeichnet,**
**dass** die Schaft-Bogenabschnitte (13) und die Schaft-Verbindungsabschnitte (14) in den Schaft-Verbindungspunkten (15) tangential ineinander übergehen.

2. Bohrvorrichtung, insbesondere Saugbohrvorrichtung, nach Anspruch 1, **dadurch gekennzeichnet, dass** die Sicherungskontur (12), insbesondere mindestens dreifach, rotationssymmetrisch ausgestaltet ist, und/oder, dass die Sicherungskontur (12) eine gleiche Anzahl an Schaft-Bogenabschnitten (13) und Schaft-Verbindungsabschnitten (14), insbesondere jeweils mindestens drei, aufweist, und/oder, dass die Schaft-Bogenabschnitte (13) im Wesentlichen gleich ausgebildet sind, und/oder, dass die Schaft-Verbindungsabschnitte (14) im Wesentlichen gleich ausgebildet sind.

3. Bohrvorrichtung, insbesondere Saugbohrvorrichtung, nach Anspruch 1 oder 2, **dadurch gekennzeichnet, dass** die Schaft-Verbindungsabschnitte (14) ungekrümmt ausgebildet und insbesondere jeweils auf einem Schenkel eines gedachten, insbesondere gleichschenkligen, Vielecks angeordnet sind, und/oder, dass die Schaft-Bogenabschnitte (13) jeweils einen Teil einer Ellipse oder eines Kreises darstellen und jeweils einen Mittelpunkt, der insbesondere von den anderen Mittelpunkten der Schaft-Bogenabschnitte (13) verschieden ist, aufweisen, und/oder, dass die Schaft-Bogenabschnitte (13) jeweils einen Teil einer Hyperbel oder einer Parabel darstellen und jeweils einen Brennpunkt, der insbesondere von den anderen Brennpunkten der Schaft-Bogenabschnitte (13) verschieden ist, aufweisen.

4. Bohrvorrichtung, insbesondere Saugbohrvorrichtung, nach einem der vorhergehenden Ansprüche, **dadurch gekennzeichnet, dass** sich der Sicherungsbereich (11) nur über einen Teil der Länge des Schaftes (9), insbesondere endseitig, erstreckt und dass der Schaft (9) einen oder mehrere weitere Schaftbereiche mit jeweils einer Schaftkontur aufweist, vorzugsweise, dass im montierten Zustand der Sicherungsbereich (11) der Bohreraufnahme (2) zugewandt und der eine oder die mehreren weiteren Schaftbereiche der Bohreraufnahme (2) abgewandt sind.

5. Bohrvorrichtung, insbesondere Saugbohrvorrichtung, nach einem der vorhergehenden Ansprüche, **dadurch gekennzeichnet, dass** die axiale Bohrersicherung (10) ein, insbesondere rastendes, erstes Formschlusselement (16) aufweist, das insbesondere an dem Aufnahmebereich (8) oder an dem Schaft (9) angeordnet ist, vorzugsweise, dass die axiale Bohrersicherung (10) eine, insbesondere umlaufende, erste Nut (17) aufweist, welche insbesondere an dem Aufnahmebereich (8) oder an dem Schaft (9) angeordnet ist, und, dass die axiale Bohrersicherung (10) eine, insbesondere umlaufende, erste Eingriffsnut (18) aufweist, welche insbesondere an dem Schaft (9) oder an dem Aufnahmebereich (8) angeordnet ist, und, dass das erste, insbesondere als Sprengring ausgebildete, Formschlusselement, in der ersten Nut (17) angeordnet ist und im montierten Zustand in die erste Eingriffsnut (18) eingreift, weiter vorzugsweise, dass die an dem Schaft (9) angeordnete erste Nut (17) oder die an dem Schaft (9) angeordnete Eingriffsnut in einem mittleren Schaftbereich des Schaftes (9) angeordnet und der Sicherungsbereich (11) endseitig angeordnet ist.

6. Bohrvorrichtung, insbesondere Saugbohrvorrichtung, nach einem der vorhergehenden Ansprüche, **dadurch gekennzeichnet, dass** der Schaft (9) einen Bohreranschlag (20) und der Aufnahmebereich (8) einen korrespondierend ausgestalteten Aufnahmeanschlag (21) aufweisen, welche während der Montage zumindest zeitweise und/oder im montierten Zustand aneinander anliegen, so dass die Position des Schaftes (9) in dem Aufnahmebereich (8) in axialer Richtung festgelegt ist, vorzugsweise, dass der Bohreranschlag (20) endseitig an einer der Bohreraufnahme (2) zugewandten Stirnseite des Bohrers (4) angeordnet ist und dass der Aufnahmeanschlag (21) an einer der Einstecköffnung (19) abgewandten Seite des Aufnahmebereichs (8) angeordnet ist.

7. Bohrvorrichtung, insbesondere Saugbohrvorrichtung, nach einem der vorhergehenden Ansprüche, **dadurch gekennzeichnet, dass** der Aufnahmebereich (8) zumindest über einen Teil seiner Länge eine Aufnahmekontur (22) aufweist und dass der Aufnahmebereich (8), insbesondere die Aufnahmekontur (22), im mathematischen Sinne ähnlich zu dem Sicherungsbereich (11), insbesondere der Sicherungskontur (12), ausgebildet ist, und/oder, dass der Aufnahmebereich (8), insbesondere die Aufnahmekontur (22), derart korrespondierend zu dem Sicherungsbereich (11), insbesondere der Sicherungskontur (12), des Schaftes (9) ausgebildet ist, dass der Sicherungsbereichs (11) während des Bohrens mit der Bohrvorrichtung (1) an zumindest drei Anlagegeraden den Teil des Aufnahmebereichs (8), der die Aufnahmekontur (22) aufweist, kontaktiert.

8. Bohrvorrichtung, insbesondere Saugbohrvorrichtung, nach einem der vorhergehenden Ansprüche, **dadurch gekennzeichnet, dass** die Bohrvorrichtung (1) eine insbesondere als Abstandhülse (30) zur Festlegung einer bestimmten Bohrtiefe (T) oder als Bohrhülse (31) zum Bohren in ein Baumaterial ausgebildete Hülse (23) aufweist, dass die Bohrvorrichtung (1), insbesondere die Bohreraufnahme (2), einen Aufsteckbereich (24) aufweist, dass die Hülse (23) eine Aufsteckausnehmung (25) aufweist und dass die Hülse (23) im montierten Zustand über die Aufsteckausnehmung (25) auf den Aufsteckbereich (24) aufgesteckt und über eine axiale Hülsensicherung (26) lösbar in axialer Richtung fixiert ist, vorzugsweise,
dass die axiale Hülsensicherung (26) ein, insbesondere rastendes, zweites Formschlusselement (27) aufweist, das an dem Aufsteckbereich (24) oder insbesondere an der Aufsteckausnehmung (25) angeordnet ist, dass die axiale Hülsensicherung (26) eine, insbesondere umlaufende, zweite Nut (28) aufweist, welche an dem Aufsteckbereich (24) oder insbesondere an der Aufsteckausnehmung (25) angeordnet ist, dass die axiale Hülsensicherung (26) eine, insbesondere umlaufende, zweite Eingriffsnut (29) aufweist, welche insbesondere an dem Aufsteckbereich (24) oder an der Aufsteckausnehmung (25) angeordnet ist und dass das zweite, insbesondere als Sprengring ausgebildete, Formschlusselement in der zweiten Nut (28) angeordnet ist und im montierten Zustand in die zweite Eingriffsnut (29) eingreift, weiter vorzugsweise,
dass die Aufsteckausnehmung (25) zumindest über einen Teil ihrer Länge eine Hülsen-Sicherungskontur (33) aufweist, welche im montierten Zustand die Hülse (23) gegenüber der Bohreraufnahme (2) gegen Verdrehen sichert, wobei hierfür die Hülsen-Sicherungskontur (33) mehrere gekrümmte Hülsen-Bogenabschnitte (34) und mehrere Hülsen-Verbindungsabschnitte (35), welche die Hülsen-Bogenabschnitte (34) an mehreren Hülsen-Verbindungspunkten (36) untereinander verbinden, aufweist, und, dass die Hülsen-Bogenabschnitte (34) und die Hülsen-Verbindungsabschnitte (35) in den Hülsen-Verbindungspunkten (36) tangential ineinander übergehen.

9. Bohrvorrichtung, insbesondere Saugbohrvorrichtung, nach Anspruch 8, **dadurch gekennzeichnet, dass** die Hülsen-Sicherungskontur (33), insbesondere mindestens dreifach, rotationssymmetrisch ausgestaltet ist, und/oder, dass die Hülsen-Sicherungskontur (33) eine gleiche Anzahl an Hülsen-Bogenabschnitten (34) und Hülsen-Verbindungsabschnitte (35), insbesondere jeweils mindestens drei, aufweist, und/oder, dass die Hülsen-Bogenabschnitte (34) im Wesentlichen gleich ausgebildet sind, und/oder, dass die Hülsen-Verbindungsabschnitte im Wesentlichen gleich ausgebildet sind, und/oder, dass die Hülsen-Verbindungsabschnitte (35) ungekrümmt ausgebildet und insbesondere jeweils auf einem Schenkel eines gedachten gleichschenkligen Vielecks angeordnet sind, und/oder, dass die Hülsen-Bogenabschnitte (34) jeweils einen Teil einer Ellipse oder eines Kreises darstellen und jeweils einen Mittelpunkt, der insbesondere von den anderen Mittelpunkten der Hülsen-Bogenabschnitte (34) verschieden ist, aufweisen, und/oder, dass die Hülsen-Bogenabschnitte (34) jeweils einen Teil einer Hyperbel oder einer Parabel darstellen und jeweils einen Brennpunkt, der insbesondere von den anderen Brennpunkten der Hülsen-Bogenabschnitte (34) verschieden ist, aufweisen.

10. Bohrvorrichtung, insbesondere Saugbohrvorrichtung, nach Anspruch 8 oder 9, **dadurch gekennzeichnet, dass** der Aufsteckbereich (24) zumindest über einen Teil seiner Länge eine Aufsteckkontur (37) aufweist und dass der Aufsteckbereich (24), insbesondere die Aufsteckkontur (37), im mathematischen Sinne ähnlich zu der Aufsteckausnehmung (25), insbesondere der Hülsen-Sicherungskontur (33), ausgebildet ist, und/oder, dass der Aufsteckbereich (24), insbesondere die Aufsteckkontur (37), derart korrespondierend zu der Aufsteckausnehmung (25), insbesondere der Hülsen-Sicherungskontur (33), ausgebildet ist, dass der Teil der Aufsteckausnehmung (25), der die Hülsen-Sicherungskontur (33) aufweist, während des Bohrens mit der Bohrvorrichtung (1) an zumindest drei Anlagegeraden den Teil des Aufsteckbereichs (24), der die Aufsteckkontur (37) aufweist, kontaktiert.

11. Bohrvorrichtung, insbesondere Saugbohrvorrichtung, nach einem der Ansprüche 8 bis 10, **dadurch gekennzeichnet, dass** die Hülse (23), insbesondere die Aufsteckausnehmung (25), einen Hülsenanschlag (38) und der Aufsteckbereich (24) einen korrespondierend ausgestalteten Aufsteckanschlag (39) aufweisen, welche im montierten Zustand und/oder während der Montage zumindest zeitweise aneinander anliegen, so dass die Position der Hülse (23) an dem Aufsteckbereich (24) in axialer Richtung festgelegt ist, vorzugsweise, dass der Hülsenanschlag (38) im Inneren der Hülse (23), insbesondere in der Aufsteckausnehmung (25), angeordnet ist und dass der Aufsteckanschlag (39) endseitig an einer dem Bohrer (4) zugewandten Stirnseite der Bohreraufnahme (2) angeordnet ist.

12. Bohrer, insbesondere Gestein-Bohrer, wobei der Bohrer (4) einen Schaft (9) zur Anordnung an einem Aufnahmebereich (8) einer Bohreraufnahme (2) einer Bohrvorrichtung (1), insbesondere einer Bohrvorrichtung (1) nach einem der Ansprüche 1 bis 11, aufweist, wobei der Schaft (9) einen Sicherungsbereich (11) zur Sicherung des montierten Bohrers (4) gegenüber der Bohreraufnahme (2) gegen Verdrehen aufweist, wobei der Sicherungsbereich (11) entlang dessen Länge eine Sicherungskontur (12) aufweist, wobei die Sicherungskontur (12) mehrere gekrümmte Schaft-Bogenabschnitte (13) und mehrere Schaft-Verbindungsabschnitte (14), welche die Schaft-Bogenabschnitte (13) an mehreren Schaft-Verbindungspunkten (15) untereinander verbinden, aufweist,
**dadurch gekennzeichnet,**
**dass** die Schaft-Bogenabschnitte (13) und die Schaft-Verbindungsabschnitte (14) in den Schaft-Verbindungspunkten (15) tangential ineinander übergehen.

13. Bohreraufnahme, insbesondere einer Bohrvorrichtung (1) nach einem der Ansprüche 1 bis 11, wobei die Bohreraufnahme (2) einen Anschlussbereich (3) zum Anschluss an eine Bohrmaschine und einen Aufnahmebereich (8) zur, insbesondere steckbaren, Aufnahme des Bohrers (4) aufweist,
**dadurch gekennzeichnet,**
**dass** die Bohreraufnahme (2) derart ausgebildet ist, dass in oder an dem Aufnahmebereich (8) ein Bohrer (4) nach Anspruch 12 aufnehmbar ist.

14. Hülse, insbesondere Abstands- oder Bohrhülse, wobei die Hülse (23) eine Aufsteckausnehmung (25) zum Aufstecken an einem Aufsteckbereich (24) einer Bohreraufnahme (2) einer Bohrvorrichtung (1), insbesondere einer Bohrvorrichtung (1) nach einem der Ansprüche 1 bis 11, aufweist, wobei die Aufsteckausnehmung (25) über zumindest einen Teil ihrer Länge eine Hülsen-Sicherungskontur (33) zur Sicherung der montierten Hülse (23) gegenüber der Bohreraufnahme (2) gegen Verdrehen aufweist, wobei die Hülsen-Sicherungskontur (33) mehrere gekrümmte Hülsen-Bogenabschnitte (34) und mehrere Hülsen-Verbindungsabschnitte (35), welche die Hülsen-Bogenabschnitte (34) an mehreren Hülsen-Verbindungspunkten (36) untereinander verbinden, aufweist,
**dadurch gekennzeichnet,**
**dass** die Hülsen-Bogenabschnitte (34) und die Hülsen-Verbindungsabschnitte (35) in den Hülsen-Verbindungspunkten (36) tangential ineinander übergehen.

15. Fertigungsverfahren, insbesondere für eine Bohrvorrichtung nach einem der Ansprüche 1 bis 11, **dadurch gekennzeichnet,**
**dass** zur Fertigung eines Bohrers (4) nach Anspruch 12 der Sicherungsbereich (11) des Schaftes (9), der die Sicherungskontur (12) aufweist, mit einem Drehmeißel oder mit einem Fräser, vorzugsweise einem Schaftfräser, gefertigt wird, wobei der Drehmeißel oder der Fräser Material in Richtung quer zur Hauptachse des Schaftes (9) abträgt, oder,
**dass** zur Fertigung einer Bohreraufnahme (2) nach Anspruch 13 der Teil des Aufnahmebereichs (8) der Bohreraufnahme (2), der die Aufnahmekontur (22) aufweist, mit einem Fräser, insbesondere einem Schaftfräser, gefertigt wird, wobei der Fräser Material in Richtung quer zur Hauptachse des Aufnahmebereichs (8) abträgt, oder,
**dass** zur Fertigung einer Hülse (23) nach Anspruch 14 der Teil der Aufsteckausnehmung (25) der Hülse (23), der die Hülsen-Sicherungskontur (33) aufweist, mit einem Fräser, insbesondere einem Schaftfräser, gefertigt wird, wobei der Fräser Material in Richtung quer zur Hauptachse der Aufsteckausnehmung (25) abträgt.
